# DEMANDE DE BREVET EUROPEEN

(11) **EP 1 477 889 A2**
(43) Date de publication de la demande: **17.11.2004**
(21) Numéro de dépôt: 04291207.1
(22) Date de dépôt: 12.05.2004
(51) Int. Cl.: G06F 3/033

(54) **Dispositif à tablette graphique avec identification des moyens d'entrée utilisés**

(30) Priorité: 12.05.2003 FR 0305693
(71) Demandeur: Phenix Sarl., 45400 Gien (FR)
(72) Inventeur: Cussat-Blanc, Michel, 45500 Gien (FR)

(57) **Abrégé**

La présente invention concerne un dispositif à tablette graphique pour la reproduction d'inscriptions sur un support d'impression, comportant une tablette graphique (1) à surface plane associée à une unité de contrôle (3) et une mémoire (4), caractérisé en ce qu'il comporte :
- au moins un moyen marqueur à encre effaçable,
- des moyens de détection localisée et des moyens de numérisation point par point de toute inscription formée par le moyen marqueur sur la surface plane de la tablette graphique (1),
- un module d'enregistrement dans l'unité de contrôle (3) pour stocker et mettre à jour dans la mémoire (4) des données représentatives des inscriptions formées par le moyen marqueur sur la surface plane,
- des moyens d'impression (5) reliés à l'unité de contrôle (3) pour reproduire sur un support d'impression une image représentative des inscriptions formées sur la surface plane de la tablette graphique (1).
Les moyens marqueurs sont associés à des moyens d'identification, qui eux sont reliés aux moyens de numérisation pour spécifier au moins une caractéristique du moyen marqueur en cours d'utilisation.

## Description

La présente invention concerne le domaine de la reproduction de dessins et d'écrits sur un support d'impression. La présente invention concerne plus particulièrement un dispositif à tablette graphique pour la reproduction d'inscriptions sur un support d'impression.

Il est connu dans l'art antérieur des systèmes à tablette graphique permettant la détection du positionnement d'un stylo générant un signal. Le document US 4 661 656 décrit ainsi une tablette graphique comprenant une pluralité de détecteurs électriques transmettant la position du stylo. Une telle tablette est particulièrement complexe et coûteuse. De plus, elle ne permet absolument pas de différencier des couleurs.

Pour de nombreuses applications courantes, il est plus convivial d'utiliser un ou plusieurs stylets à encre de couleur pour écrire et/ou dessiner sur une surface plane d'une tablette graphique. Par ailleurs, il n'existe pas jusqu'à présent de système reproduisant quantitativement et qualitativement tout ce qui est présent sur le panneau de la tablette graphique pour imprimer le contenu du panneau sur un support d'impression. Les tablettes graphiques de l'art antérieur ne sont pas adaptées pour permettre une reproduction fidèle automatique d'un dessin coloré et/ou d'un texte réalisé manuellement à l'aide de stylet(s) à encre ou analogue avec une épaisseur de trait pouvant varier.

La présente invention a donc pour objet de pallier un ou plusieurs des inconvénients de l'art antérieur en définissant un dispositif à tablette graphique permettant de reproduire sur un support d'impression des notes et dessins inscrits à l'encre sur une tablette graphique.

Ce but est atteint grâce à un dispositif à tablette graphique destiné à la reproduction d'inscriptions sur un support d'impression, comportant une tablette graphique à surface plane associée à une unité de contrôle et une mémoire, caractérisé en ce qu'il comporte :
- au moins un moyen marqueur à encre effaçable,
- des moyens de détection localisée et des moyens de numérisation point par point et en fonction de sa localisation de toute inscription formée par le moyen marqueur sur la surface plane de la tablette graphique,
- un module d'enregistrement dans l'unité de contrôle pour stocker et mettre à jour dans la mémoire les données représentatives des inscriptions formées par le moyen marqueur sur la surface plane,
- des moyens d'impression reliés à l'unité de contrôle pour reproduire sur un support d'impression une image représentative des données correspondant aux inscriptions formées sur la surface plane de la tablette graphique.

Selon une autre particularité, les moyens marqueurs comprennent au moins un stylet ou feutre à encre de couleur associé à des moyens d'identification du feutre en cours d'utilisation, les moyens d'identification étant reliés aux moyens de numérisation pour spécifier en paramètre au moins une caractéristique d'identification spécifique du stylet en cours d'utilisation.

Selon une autre particularité, les moyens de numérisation sont agencés pour tenir compte de spécifications d'épaisseur de pointe et/ou de couleur d'encre, fournies à l'aide des moyens d'identification du stylet en cours d'utilisation.

Selon une autre particularité, les moyens de numérisation sont programmés pour fournir des données graphiques en format différent de type mode point « bitmap » ou format analogue avec ou non compression de données graphiques, et un organe de commande d'impression est relié à l'unité de contrôle pour déclencher après adaptation au format du support d'impression la reproduction par les moyens d'impression d'une image en format « bitmap » ou analogue.

Selon une autre particularité, les moyens d'impression comprennent un rouleau ou des feuilles support d'impression de dimensions différentes des dimensions de la surface plane de la tablette graphique.

Selon une autre particularité, un bouton de remise à zéro actionnable par l'utilisateur déclenche des moyens d'effacer la mémoire commandés par l'unité de contrôle, un témoin d'occupation de la mémoire étant commandé par l'unité de contrôle pour visualiser le remplissage de la mémoire.

Selon une autre particularité, l'unité de contrôle est un microprocesseur pourvu d'une interface de connexion avec un ordinateur permettant d'échanger les données de la mémoire avec l'ordinateur.

Selon une autre particularité, les moyens d'identification du stylet en cours d'utilisation comprennent un système d'identification d'une puce intégrée dans un stylet ou un élément périphérique associé à un stylet.

Selon une autre particularité, la puce intégrée au stylet ou dans un élément support du stylet comporte des moyens de communication sans contact avec l'unité de contrôle.

Selon une autre particularité, les moyens d'identification du stylet en cours d'utilisation comprennent un réseau de liaisons filaires entre chaque stylet et l'unité de contrôle.

L'invention, avec ses caractéristiques et avantages, ressortira plus clairement à la lecture de la description faite en référence aux dessins annexés donnés à titre d'exemples non limitatifs dans lesquels :
- la figure 1 représente schématiquement les éléments constitutifs d'une forme de réalisation du dispositif selon l'invention;
- la figure 2 représente une vue en perspective, d'un mode de réalisation de l'invention;
- la figure 3 représente schématiquement une variante de réalisation du dispositif l'invention.

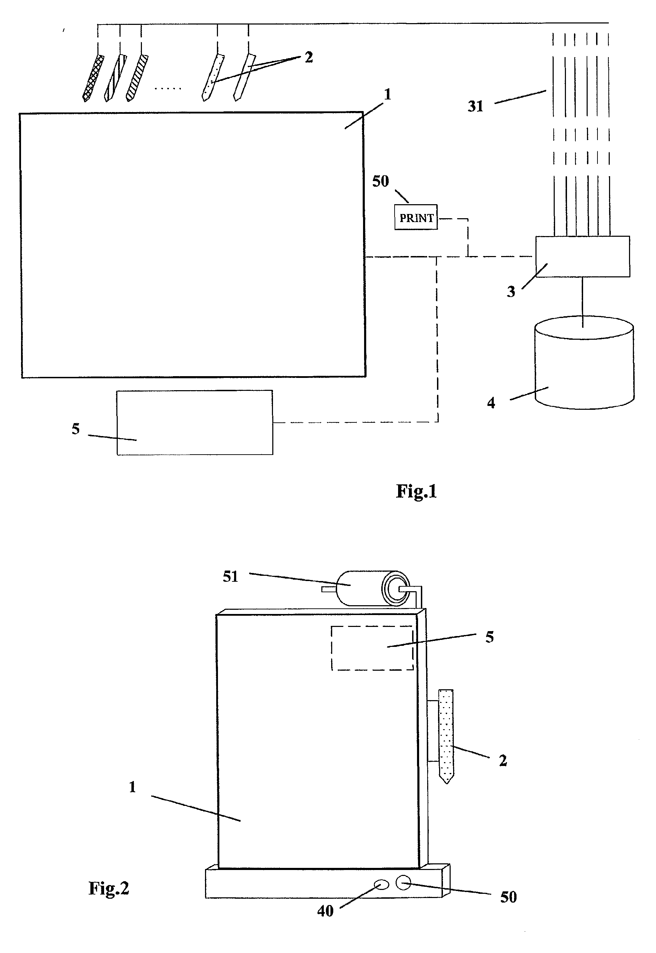

L'invention va être à présent décrite en référence à la figure 1.

Le dispositif à tablette comporte une tablette graphique (1) à surface plane associée à une unité de contrôle (3) et une mémoire (4). Un utilisateur de ce dispositif a la possibilité d'écrire ou de dessiner à la main directement sur la surface plane de la tablette graphique (1) à l'aide d'au moins un marqueur à encre effaçable. Le revêtement de la surface plane est par exemple en matériau plastique d'un type connu permettant d'effacer avec un chiffon les inscriptions marquées sur la surface plane. La surface plane peut être ainsi formée par une ardoise plastique de type classique, les feutres étant à encre de couleur. En variante, un support papier ou autre support usuel de fine épaisseur peut être disposé sur la surface plane de la tablette graphique (1). Un stylet pour l'effacement peut également être prévu. Dans le mode de réalisation de la figure 1, plusieurs stylets (2) ou feutres de couleur différente sont fournis avec la tablette graphique (1). L'épaisseur des pointes des stylets (2) peut varier. Il est possible d'envisager une surface plane colorée dans un mode de réalisation de l'invention.

La tablette graphique (1) comporte des moyens de détection localisée et des moyens de numérisation point par point, en fonction de sa localisation, de toute inscription formée par le moyen marqueur sur la surface plane, de façon que le dessin et/ou texte inscrit par l'utilisateur est numérisé en données transmises à l'unité de contrôle. Cette unité de contrôle (3) peut être constituée d'un microprocesseur pourvu d'un module d'enregistrement pour stocker et mettre à jour dans la mémoire (4) des données représentatives des inscriptions que l'utilisateur a réalisées sur la surface plane à l'aide des stylets (2). La tablette graphique (1) comprend également des moyens d'impression (5) reliés à l'unité de contrôle (3) pour reproduire sur un support d'impression une image représentative des données correspondant aux inscriptions formées sur la surface plane. L'invention permet donc de reproduire à l'identique sur papier, avec un format identique ou différent, ce qui a été écrit et/ou dessiné par l'utilisateur sur la surface plane de la tablette graphique (1).

Dans un mode de réalisation de l'invention, les moyens d'impression (5) consistent en une imprimante, couleur ou monochrome, reliée à la tablette graphique par des moyens de connexion de type connu, par câble ou sans fil. Un L'unité de contrôle (3), intégrée à la tablette graphique (1), permet de relier toutes les fonctionnalités utilisées dans l'invention. En particulier, l'unité de contrôle (3) peut être associée à des moyens d'identification du stylet en cours d'utilisation. Ces moyens d'identification sont reliés aux moyens de numérisation pour spécifier en paramètre au moins une caractéristique d'identification spécifique du stylet en cours d'utilisation. Dans le mode de réalisation de la figure 1, les moyens d'identification comprennent un réseau (31) de liaisons filaires entre chaque stylet (2) et l'unité de contrôle (3). Par exemple, dès qu'un stylet (2) est déplacé d'un logement de stockage prédéfini ou rapproché de la surface plane de la tablette graphique (1), ce stylet est identifié comme le stylet utilisé par les moyens d'identification, et l'unité de contrôle (3) prend en compte au moins une donnée d'identification de ce stylet pour associer la bonne couleur et/ou épaisseur du stylet aux données représentatives des inscriptions réalisées par ce stylet. Un capteur de présence, par exemple une cellule photoélectrique, peut être associé à l'emplacement de rangement d'un stylet (2) pour détecter un début d'utilisation d'un stylet. D'autres caractéristiques d'identification supplémentaires du stylet, autres que la couleur et l'épaisseur, peuvent être envisagées dans une variante de réalisation. Cela permet d'imprimer un dessin et/ou un texte avec notamment les mêmes couleurs que celles utilisées lors de l'exécution du dessin et/ou texte sur la surface plane de la tablette graphique (1).

Les moyens de détection localisée des inscriptions peuvent comprendre une pluralité de capteurs de reconnaissance positionnés sous la surface plane de la tablette graphique (1). La surface plane est par exemple associée à une couche de tissu tressé de fils et dont les contractions par appui du moyen marqueur renseignent sur les coordonnées de position du contact. Les moyens de numérisation des inscriptions consistent par exemple en un logiciel de l'unité de contrôle (3) programmé pour associer aux positionnements et caractéristiques de tracés/inscriptions fournis par les capteurs de reconnaissance des données graphiques numérisées dans un format différent de type en mode point « bitmap » ou format analogue avec compression ou non de données graphiques. Les moyens de numérisation sont également agencés pour tenir compte de spécifications d'épaisseur de pointe et/ou de couleur d'encre fournies à l'unité de contrôle par les moyens d'identification du stylet en cours d'utilisation, de sorte que les données en format bitmap contiennent toutes les informations nécessaires pour représenter fidèlement les inscriptions exécutées sur la surface plane par l'utilisateur.

Dans un mode de réalisation de l'invention, un organe de commande d'impression (50), comprenant par exemple un bouton d'impression, est relié à l'unité de contrôle (3) pour déclencher après adaptation au format du support d'impression la reproduction par les moyens d'impression (5) d'une image en format « bitmap » ou analogue. Les moyens d'impression (5) comprennent un rouleau ou des feuilles support d'impression de dimensions différentes des dimensions de la surface plane de la tablette graphique (1). Cette surface peut par exemple varier entre un format de type A4 (297 * 210 mm) à un format de type A1 (840 * 594 mm). La mémoire (4) permet le stockage d'une image représentative de ce qui est exécuté sur la surface plane par l'utilisateur au fur et à mesure de l'évolution de l'exécution. L'organe de commande d'impression (50) est actionné par appui sur un bouton d'impression pour imprimer l'intégralité de l'image stockée sous forme de données numériques dans la mémoire (4).

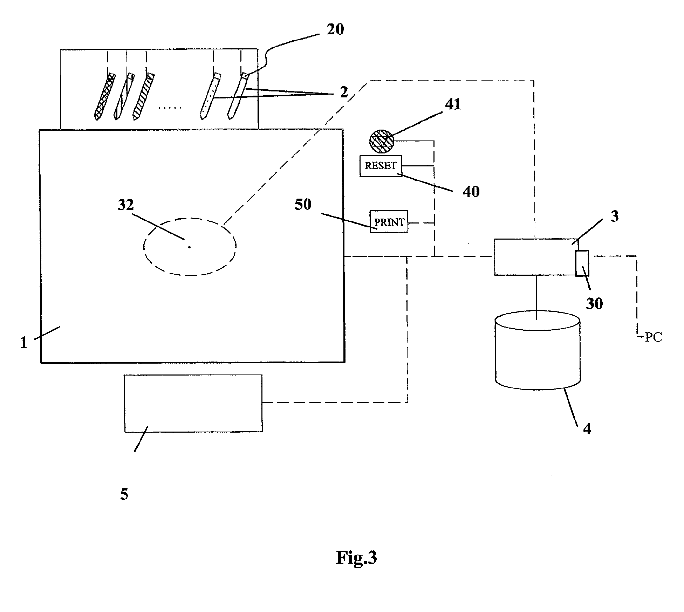

L'invention va être à présent décrite en référence aux figures 2 et 3.

Le mode de réalisation de la figure 2 correspond à une application de l'invention comme bloc-notes ou pense-bête doté d'un système d'édition de la liste exécutée à l'aide d'un unique stylet (2). Un tel dispositif à tablette graphique permet l'édition sur un support d'impression d'une liste de courses, de rendez-vous, d'événements à effectuer, etc. Dans ce mode de réalisation, le dispositif est pourvu par exemple de moyens d'impression (5) intégrés à la tablette graphique (1). L'imprimante utilisée peut être matricielle, à aiguille ou à transfert thermique jet d'encre, etc. et équipée d'un rouleau de papier (51) servant de support d'impression. L'alimentation de l'imprimante peut être autonome, effectuée par des batteries ou piles d'un type connu. Une alimentation de l'imprimante par un adaptateur secteur peut être également prévue. Le format du support d'impression est réduit significativement par rapport aux dimensions de la surface plane, avec par exemple un facteur de rétrécissement de l'image de l'ordre de 20%. Cela permet d'écrire en gros caractères afin de bien visualiser le texte de la tablette (1), et d'imprimer sur une feuille de taille réduite afin d'obtenir un format de poche. La mémoire (4) peut être automatiquement libérée par l'unité de contrôle (3) après chaque impression.

En plus d'un organe de commande d'impression (50), le dispositif selon l'invention peut aussi être équipé de moyens gérés par l'unité de contrôle (3) pour effacer la mémoire (4), déclenchés par actionnement d'un bouton (40) de remise à zéro. Dans le mode de réalisation de la figure 3, un témoin (41) d'occupation de la mémoire est également fourni pour renseigner l'utilisateur sur l'état du remplissage de la mémoire (4). Ce témoin (41) est relié à l'unité de contrôle (3) qui dispose d'un module d'observation de l'état de la mémoire (4).

Dans la variante de réalisation présentée à la figure 3, l'identification des stylets (2) est réalisée par l'intermédiaire d'une puce d'identification (20) intégrée dans le corps du stylet (2). Une telle puce d'identification peut également se placer dans un capuchon ou une bague venant se placer sur le stylet ou dans un quelconque support du stylet (2). Le système d'identification d'une puce (20) intégrée dans un stylet (2) ou un élément périphérique associé à un stylet peut reposer sur la technologie Bluetooth. La puce (20) peut ainsi communiquer à distance avec l'unité de contrôle (3) associée à la tablette (1). Dans le mode de réalisation de la figure 3, les moyens d'identification comportent un élément d'émission et réception (32) de très faible portée positionné à proximité du centre de la surface plane de la tablette graphique (1) pour détecter la présence d'une puce d'identification, par exemple du type Bluetooth ou équivalent. D'autres modes de réalisation sont naturellement envisageables pour les moyens d'identification du stylet en cours d'utilisation.

Pour des applications ludiques, le dispositif selon l'invention est équipé de plusieurs stylets (2) de couleurs variées et les moyens d'impression (5) comprennent une imprimante couleur à jet d'encre, incorporée ou non.

Pour d'autres applications, par exemple comme tableau de conférence, la surface plane est de grand format et les stylets (2) sont de grosse taille. L'impression est effectuée avec un coefficient de réduction pour obtenir une image de format A4 ou équivalent. Après avoir rempli la surface plane de la tablette graphique (1), l'utilisateur pourra aussi sauvegarder le contenu de la mémoire (4) dans des moyens de mémorisation d'un ordinateur relié au dispositif. Pour cela, l'unité de contrôle (3) est pourvue d'une interface de connexion (30) avec un ordinateur. L'interface de sortie vers l'ordinateur peut comprendre un port parallèle ou série, être de type USB (Universal Serial Bus) ou autre type de connexion connu. Ainsi, l'utilisateur pourra commencer une nouvelle page tout en conservant le contenu des pages précédentes.

Un des avantages du dispositif selon l'invention est de permettre l'impression sur un support de format standard d'une image réalisée à la main par l'utilisateur de manière conviviale sur une tablette graphique. Le dispositif peut être ainsi utilisé comme jeu éducatif par de jeunes enfants.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif à tablette graphique destiné à la reproduction d'inscriptions sur un support d'impression, comportant une tablette graphique (1) à surface plane associée à une unité de contrôle (3) et une mémoire (4), **caractérisé en ce qu'**il comporte :
- au moins un moyen marqueur à encre effaçable,
- des moyens de détection localisée et des moyens de numérisation point par point et en fonction de sa localisation de toute inscription formée par le moyen marqueur sur la surface plane de la tablette graphique (1),
- un module d'enregistrement dans l'unité de contrôle (3) pour stocker et mettre à jour dans la mémoire (4) les données représentatives des inscriptions formées par le moyen marqueur sur la surface plane,
- des moyens d'impression (5) reliés à l'unité de contrôle (3) pour reproduire sur un support d'impression une image représentative des données correspondant aux inscriptions formées sur la surface plane de la tablette graphique (1).

2. Dispositif selon la revendication 1, dans lequel les moyens marqueurs comprennent au moins un stylet (2) ou feutre à encre de couleur associé à des moyens d'identification du stylet en cours d'utilisation, les moyens d'identification étant reliés aux moyens de numérisation pour spécifier en paramètre au moins une caractéristique d'identification spécifique du stylet en cours d'utilisation.

3. Dispositif selon la revendication 1 ou 2, dans lequel les moyens de numérisation sont agencés pour tenir compte de spécifications d'épaisseur de pointe et/ou de couleur d'encre, fournies à l'aide des moyens d'identification du stylet en cours d'utilisation.

4. Dispositif selon l'une quelconque des revendications 1 à 3, dans lequel les moyens de numérisation sont programmés pour fournir des données graphiques en format différent de type mode point « bitmap » ou format analogue avec ou non compression de données graphiques, et un organe de commande d'impression (50) est relié à l'unité de contrôle (3) pour déclencher après adaptation au format du support d'impression la reproduction par les moyens d'impression (5) d'une image en format « bitmap » ou analogue.

5. Dispositif selon l'une quelconque des revendications 1 à 4, dans lequel, les moyens d'impression (5) comprennent un rouleau (51) ou des feuilles support d'impression de dimensions différentes des dimensions de la surface plane de la tablette graphique (1).

6. Dispositif selon l'une quelconque des revendications 1 à 5, dans lequel un bouton (40) de remise à zéro actionnable par l'utilisateur déclenche des moyens d'effacer la mémoire (4) commandés par l'unité de contrôle (3), un témoin (41) d'occupation de la mémoire étant commandé par l'unité de contrôle (3) pour visualiser le remplissage de la mémoire (4).

7. Dispositif selon l'une quelconque des revendications 1 à 6, dans lequel l'unité de contrôle (3) est un microprocesseur pourvu d'une interface de connexion (30) avec un ordinateur permettant d'échanger les données de la mémoire (4) avec l'ordinateur.

8. Dispositif selon l'une quelconque des revendications 2 à 7, dans lequel les moyens d'identification du stylet en cours d'utilisation comprennent un système d'identification (32) d'une puce (20) intégrée dans un stylet (2) ou un élément périphérique associé à un stylet.

9. Dispositif selon la revendication 8, dans lequel la puce (20) intégrée au stylet (2) ou dans un élément support du stylet comporte des moyens de communication sans contact avec l'unité de contrôle (3).

10. Dispositif selon l'une quelconque des revendications 2 à 7, dans lequel les moyens d'identification du stylet en cours d'utilisation comprennent un réseau (31) de liaisons filaires entre chaque stylet (2) et l'unité de contrôle (3).
